# EUROPÄISCHE PATENTSCHRIFT

(11) **EP 1 234 626 B1**
(45) Veröffentlichungstag und Bekanntmachung des Hinweises auf die Patenterteilung: **09.05.2007**
(21) Anmeldenummer: 02004005.1
(22) Anmeldetag: 22.02.2002
(51) Int. Cl.: B23B 29/02

(54) **Drehmaschine zur spanabhebenden Innenbearbeitung von hohlen Werkstücken**
Lathe for internal machining of hollow pieces
Tour pour l'usinage intérieur d'éléments creuses

(30) Priorität: 23.02.2001 DE 10108698
(43) Veröffentlichungstag der Anmeldung: 28.08.2002
(73) Patentinhaber: SAUERESSIG GMBH & CO., 48691 Vreden (DE)
(72) Erfinder: Brüggemann, Bernhard, 48691 Vreden (DE)
(74) Vertreter: Tönhardt, Marion

(56) Entgegenhaltungen:
- DE-A- 3 532 539
- DE-B- 1 117 972
- GB-A- 1 200 421
- US-A- 3 937 110
- US-A- 4 856 945

## Beschreibung

Die Erfindung betrifft eine Drehmaschine zur spanabhebenden Innenbearbeitung von hohlen Werkstücken, mit einer Bohrstange, auf der ein Werkzeugträger angeordnet ist, und einer Einrichtung zum Halten eines Werkstückes, so daß es die Bohrstange zumindest abschnittsweise umgibt.

In handelsüblichen Drehmaschinen werden hohle Werkstücke, insbesondere lange hohlzylindrische Werkstücke, mit Bohrstangen bearbeitet. Am Markt werden Bohrstangen verschiedenster Konstruktion angeboten. Diese werden an einem ihrer Enden eingespannt, die Bearbeitung des Werkstückes erfolgt dann freiliegend. Mit derartigen Bohrstangen lassen sich Bohrungen mit einer maximalen Länge bearbeiten, die etwa das 15fache des Bohrstangendurchmessers beträgt. Bei ungünstigem Aspektverhältnis von Länge zu Durchmesser des Werkstücks sind Bohrungsausdreharbeiten über größere Längen nicht mehr möglich. Weiter sind die bei den einseitig gespannten freifliegenden Bohrstangen erzeugten Toleranzen beim Ausdrehen von Rohren nicht akzeptabel. Die gewünschte Oberflächenrauhigkeit kann nicht mehr erzielt werden. Aufgrund von Toleranzen beim Rohrhersteller entstehen zudem bei unterschiedlichen Spantiefen Schwingungen im Werkzeug, was wiederum zu einer mangelhaften Oberfläche führt.

Daher wird für Bohrausdreharbeiten über größere Längen das sogenannte Tieflochausbohrverfahren eingesetzt, bei welchem der Bohrkopf geführt wird. Hier läßt sich eine hohe Oberflächengüte und Maßhaltigkeit garantieren, es können allerdings nur zylindrische Bohrungen erstellt werden.

Die US-A-4 856 945, die den Oberbegriff von Anspruch 1 bildet, betrifft eine Drehmaschine zur spanabhebenden Innenbearbeitung von hohlen Werkstücken, mit einer Bohrstange, auf der ein Werkzeugträger angeordnet ist, und einer Einrichtung zum Halten des Werkstücks, so, daß es die Bohrstange zumindest abschnittweise umgibt. Die Bohrstange ist an einem Ende eingespannt und rotierend gelagert. Der Rotationsantrieb erfolgt mittels einer separaten Bohrmaschine. Der Werkzeugträger ist zum Zwecke der Montage auf der Bohrstange bewegbar, während des Betriebes der Drehmaschine sitzt er jedoch ortsfest auf der Bohrstange. Eine Einrichtung zum Halten des Werkstückes hält dieses fest und unverrückbar.

Die US-A-3 937 110 betrifft eine Drehmaschine für die spanende Formgebung von inneren, rotierenden Oberflächen in hohlen Werkstücken, welche auf einer Rotationsachse gehalten sind. Zwei parallele Bohrstangen sind dabei je lediglich an einem ihrer Enden gelagert, das jeweilige andere Ende ist frei. An jeder der beiden Bohrstangen ist ein Werkzeug ortsfest eingebaut.

Die GB-A-1 200 421 betrifft eine Fräsmaschine zum Fräsen von inneren Oberflächen eines röhrenförmigen Elementes. Der Fräser rotiert dabei um eine feste Achse, die senkrecht zu der Längsachse des Werkstücks ist. Die hohle Bohrstange ist an einem Ende gelagert und hat ein freiliegendes Ende.

Es ist die Aufgabe der vorliegenden Erfindung, eine Drehmaschine zur spanabhebenden Innenbearbeitung von hohlen Werkstücken bereitzustellen, mit dem Bohrausdreharbeiten über eine große Länge des Werkstücks mit geringen Toleranzen realisiert werden können.

Dieses Aufgabe wird mit einer Drehmaschine nach Anspruch 1 gelöst. Vorteilhafte Ausgestaltungen sind Gegenstand der Unteransprüche.

Erfindungsgemäß ist vorgesehen, daß die Bohrstange an ihren beiden Enden eingespannt und feststehend, d.h. nicht um ihre Achse drehbar, gehalten ist und der Werkzeugträger zur Durchführung der spanabhebenden Innenbearbeitung bewegbar bewegbar an der Bohrstange angeordnet ist. Der Werkzeugträger kann somit gesteuert an der Bohrstange wandern und die gewünschte spanabhebende Innenbearbeitung durchführen. Das Werkzeug ist in der Einrichtung zum Halten eine Werkstücks drehbar gehalten.

Bevorzugt ist, daß der Werkzeugträger zumindest axial entlang der Bohrstange bewegbar ist und auch radial in bezug auf die Achse der Bohrstange verfahren werden kann.

Weiter vorteilhaft weist die Einrichtung zum Halten eines Werkstückes lösbare Klemmsysteme mit Spannkopf auf.

Dabei ist bevorzugt, wenn jedes Klemmsystem als Spannkopf eine Hohlscheibe aufweist, wobei das Werkstück zwischen den Hohlscheiben einzuklemmen ist. Besonders bevorzugt sind die Hohlscheiben als Kegelstumpfmantel ausgebildet. Dies ermöglicht auch die Bearbeitung von dünnwandigen Werkstücken. Die kegelstumpfmantelförmig ausgebildeten Hohlscheiben halten das Rohrwerkstück ringförmig, umlaufend und somit kreisrund fest.

Über die Klemmsysteme bzw. Spannköpfe und insbesondere die Hohlscheiben erfolgt auch der Drehantrieb des Werkstückes.

Es sollte zumindest einer der Spannköpfe für das Werkstück relativ zu dem anderen verschiebbar sein, damit die Drehmaschine auf unterschiedliche Rohrlängen eingerichtet werden kann.

Weiter vorteilhaft wird die Bohrstange auf zumindest einem Bohrstangenschlitten so gehalten, daß sie längs ihrer Achse verfahrbar ist, nach dem das Gegenlager gelöst ist und damit das Werkzeug gewechselt werden kann. Weiter kann die Bohrstange in Richtung senkrecht zu ihrer Achse anstellbar sein, damit beispielsweise schlanke, kegelförmige Bohrungen in Rohrwerkstücken angebracht werden können. Durch simultane Steuerung der Bohrstangenschlitten und des Werkzeugträgers sowie durch Ausnutzen der diversen Anstellmöglichkeiten können helixartige Nuten, Bombagen, konvexe und andere komplexe Formen erstellt werden.

Grundsätzlich ist daran gedacht, daß der Werkzeugträger beispielsweise einen Drehmeißel hält, es können aber auch geometrisch unbestimmte Werkzeuge verwendet werden, so daß die erfindungsgemäße Drehmaschine auch als Schleifmaschine eingesetzt werden kann. Hierzu kann auf den Werkzeugträger beispielsweise ein rotierendes Werkzeug aufgesetzt werden.

Im folgenden soll die Erfindung beispielhaft anhand der beigefügten Zeichnung näher erläutert werden. Es zeigt:
- Figur 1: eine Seitenansicht einer Ausführungsform der Drehmaschine gemäß der vorliegenden Erfindung;
- Figur 2: eine Draufsicht auf die Drehmaschine der Figur 1; und
- Figur 3: eine Querschnittsansicht, die Einzelheiten der Lagerung der Bohrstange und der Führung des Werkzeugträgers zeigt.

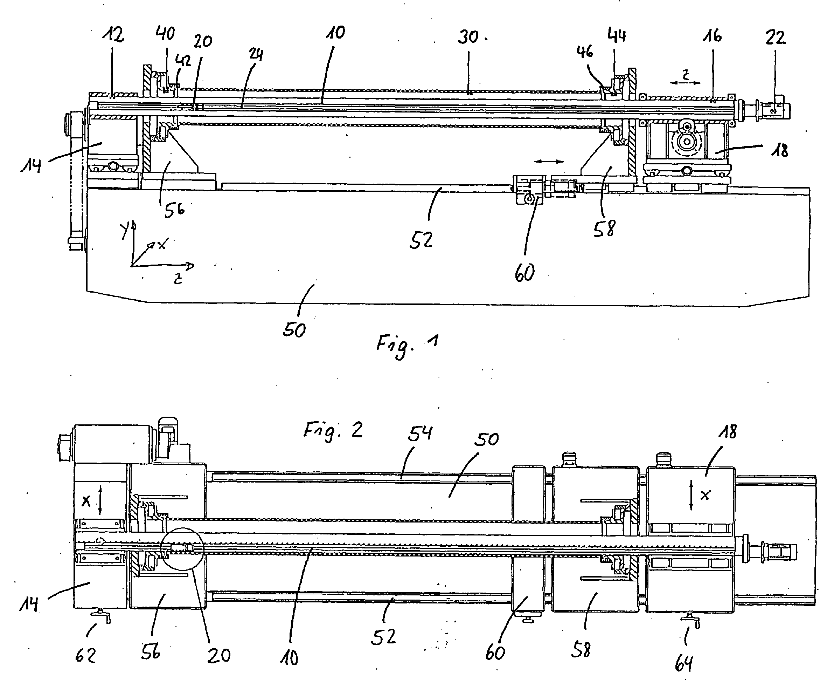

Figur 1 zeigt eine Ausführungsform einer Drehmaschine gemäß der vorliegenden Erfindung, deren Kernstück eine Bohrstange 10 ist, welche an ihren beiden Enden in jeweils einem Spannkopf 12, 16 feststehend eingespannt bzw. gelagert ist, d.h. die Bohrstange 10 ist nicht um ihre Achse drehbar. Die Spannköpfe 12, 16 sind auf Schlitten 14, 18 angeordnet, so daß die Bohrstange 10 gemeinsam mit den Schlitten 14, 18 verfahren werden kann, beispielsweise kann die Bohrstange 10 mit Hilfe der Schlitten 14, 18 auch in x-Richtung angestellt werden, was im Zusammenhang mit Figur 2 näher beschrieben wird. Zumindest einer der Schlitten, hier der Schlitten 18, ist in z-Richtung zu Montagezwecken, wie später erläutert wird, verfahrbar. Die Bohrstange 10 weist eine Längsführung 24 auf, die sich im wesentlichen über ihre gesamte Länge erstreckt, in der ein Werkzeugträger in axialer Richtung, also der z-Richtung hin- und herbewegbar ist. Der Werkzeugträger 20 weist dabei beispielsweise einen in Figur 1 nicht dargestellten Schlitten auf, an dem ein Werkzeug, wie ein Drehmeißel oder dergleichen, mittels einer Klemmvorrichtung gehalten wird. Auf die Bohrstange 10 ist an einem ihrer Enden eine elektrisch oder mechanisch arbeitende Vorschubeinheit 22 für den Werkzeugträger 20 angeordnet. Die Vorschubeinheit 22 ist stufenlos regelbar. In der Figur 1 ist der Schlitten 14 als stationär dargestellt, er kann aber ebenso wie der Schlitten 18 auf einem auf einem Untergrund 50 aufgebauten Schienensystem 52, 54 bewegbar sein. Dies ermöglicht, zusammen mit dem Anstellen der Bohrstange 10 in x-Richtung vielfältige Möglichkeiten zum Erzeugen einer Geometrie auf der Innenseite hohler Werkstücke.

Zwischen den Schlitten 14, 18 ist eine Einrichtung zum Halten eines Werkstücks 30 vorgesehen, hier eines zylindrischen Rohres, das die Bohrstange 10 umgebend in zwei Klemmsystemen oder Spannköpfen 40, 44 gehalten ist. Der Spannkopf 40 ist an einem feststehenden Träger 56 angeordnet, der Spannkopf 44 an einem auf dem Schienensystem 52, 54 verfahrbaren Träger 58, so daß die Einrichtung zum Halten eines Werkstückes auf unterschiedliche Werkstücklängen eingestellt werden kann. Jeder Spannkopf 40 bzw. 44 weist eine Hohlscheibe 42 bzw. 46 auf, die über Druck axial gegen das Werkstück angestellt werden und das Werkstück 30 zwischen sich einklemmen. Jede Hohlscheibe 42, 46 kann Ringnuten aufweisen, damit die Ränder des rohrförmigen Werkstückes 30 sicher gehalten werden, es ist auch möglich, die Hohlscheibe als Kegelstumpfmantel auszubilden, so daß eine automatische Ausrichtung des Werkstücks 30 erfolgt. Die Hohlscheiben 42, 46 sind schnell auswechselbar und können so an unterschiedliche Durchmesser der rohrförmigen Werkstücke 30 angepaßt werden. Die Bohrstange 10 verläuft durch die zentralen Öffnungen der Hohlscheiben 42, 46 und weiter durch eine in jedem Träger 56, 58 im wesentlichen mit den zentralen Öffnungen ausgerichtete Öffnung.

Wenn ein Werkstück 30 montiert werden soll, wird zuvor die Bohrstange 10 aus dem Spannkopf 12 gelöst und mit Hilfe des Schlittens 18 in z-Richtung nach außen verfahren. Auch beim Wechsel des Werkzeuges wird so vorgegangen, so daß der Werkzeugwechsel auch bei eingespanntem Werkstück 30 erfolgen kann.

Figur 2 zeigt, wie die Anstellung der Bohrstange 10 in x-Richtung erfolgt. Jeder der Schlitten 14, 18 ist mit einem Antrieb versehen, um die Schlittenwagen unabhängig voneinander in Richtung der mit "x" gekennzeichneten Doppelpfeile zu bewegen. Werden die Schlitten 14, 18 unterschiedlich zugestellt ist die Bohrstange 10 für das Erstellen von schlanken, kegelförmigen Bohrungen in Rohrwerkstücken 30 unter geringen Winkeln zur z-Achse angeordnet. Sind, wie in Figur 2 dargestellt, die Schlidten parallel zur z-Achse verschoben liegt die Bohrstange 10 für eine zylindrische Bohrung des Werkstücks 30. Die Spantiefenzustellung erfolgt somit letztlich über die beiden Spannköpfe 12, 16 für die Bohrstange 10. Bei der dargestellten Ausführungsform ist ein mechanischer Antrieb in Form von Handkurbeln 62, 64 vorgesehen.

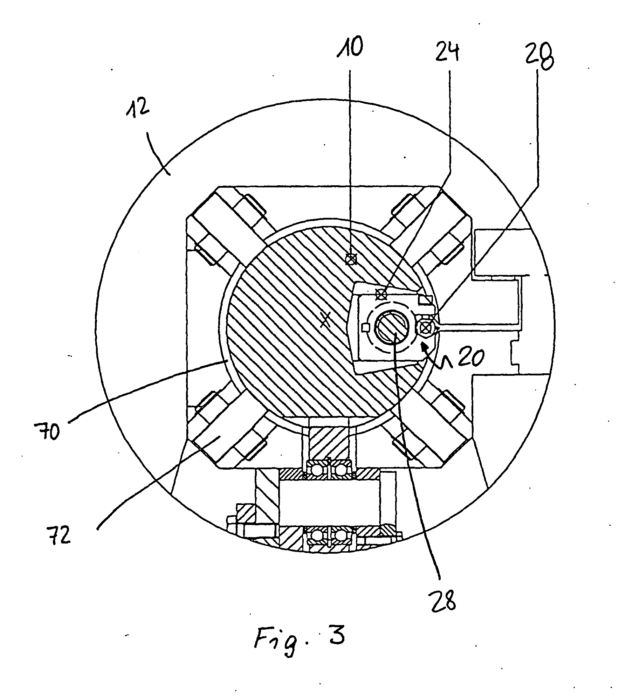

Figur 3 zeigt eine Schnittansicht durch einen Spannkopf, beispielsweise den Spannkopf 12, der Bohrstange 10. Der Spannkopf 12 weist eine axiale Bohrung 70 für die Bohrstange 10 auf, wobei am Außenumfang dieser Bohrung 70 vier Spannlager 72 angeordnet sind, die die Bohrstange 10 feststehend halten, so daß sie sich nicht verdrehen kann. Die Bohrstange 10 weist eine Führung 24 für den Werkzeugträger 20 in Form einer sich am Außenumfang erstreckenden Rinne auf, die eine an den Werkzeugträger 20 angepaßte Tiefe aufweist, derart, daß auch eine radiale Bewegung des Werkzeugträgers 20 in bezug auf die Bohrstange 10 möglich wird. Der Werkzeugträger 20 besteht im einzelnen aus einem Schlitten 26, der in der Führung bzw. Rinne 24 verfahrbar ist, und einer Werkzeugklemmvorrichtung 28, die am Längsschlitten 26 befestigt ist und das Bearbeitungswerkzeug aufnimmt.

Die Drehmaschine gemäß der Erfindung ist gleichermaßen für metallische und nichtmetallische Werkstücke geeignet.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein

### BEZUGSZEICHENLISTE

- 10: Bohrstange
- 12: Spannkopf für Bohrstange
- 14: Schlitten
- 16: Spannkopf für Bohrstange

- 20: Werkzeugträger
- 22: Vorschubeinheit
- 24: Führung

- 30: Werkstück

- 50: Untergrund
- 52: Schiene, Schienensystem
- 54: Schiene
- 56: Träger
- 55: Träger

- 60: Feststelleinrichtung
- 62: Handkurbel
- 64: Handkurbel

## Patentansprüche

1. Drehmaschine zur spanabhebenden Innenbearbeitung von hohlen Werkstücken, mit
- einer Bohrstange (10), auf der ein Werkzeugträger (20) angeordnet ist; und
- einer Einrichtung (40, 44) zum Halten eines Werkstückes, so daß es die Bohrstange (10) zumindest abschnittsweise umgibt;
**dadurch gekennzeichnet, daß**
- das Werkstück (30) in der Einrichtung (40, 44) zum Halten eines Werkstückes drehbar gehalten ist,
- die Bohrstange (10) an ihren beiden Enden eingespannt und feststehend, d. h. nicht um ihre Achse drehbar, gehalten ist; und
- der Werkzeugträger (20) zur Durchführung der spanabhebenden Innenbearbeitung bewegbar an der Bohrstange (10) angeordnet ist.

2. Drehmaschine nach Anspruch 1, **dadurch gekennzeichnet, daß** der Werkzeugträger (20) zumindest axial entlang der Bohrstange (10) bewegbar ist.

3. Drehmaschine nach Anspruch 1 oder 2, **dadurch gekennzeichnet, daß** der Werkzeugträger (20) radial in bezug auf die Achse der Bohrstange (10) bewegbar ist.

4. Drehmaschine nach einem der Ansprüche 1 bis 3, **dadurch gekennzeichnet, daß** die Einrichtung (40, 44) zum Halten eines Werkstückes lösbare Klemmsysteme mit Spannkopf aufweist.

5. Drehmaschine nach Anspruch 4, **dadurch gekennzeichnet, daß** jedes Klemmsystem als Spannkopf eine Hohlscheibe (42, 46) aufweist, wobei das Werkstück (30) zwischen den Hohlscheiben einzuklemmen ist.

6. Drehmaschine nach Anspruch 5, **dadurch gekennzeichnet, daß** die Hohlscheibe (42, 46) als Kegelstumpfmantel ausgebildet ist.

7. Drehmaschine nach einem der Ansprüche 4 bis 6, **dadurch gekennzeichnet, daß** die Klemmsysteme (40, 44) und insbesondere die Hohlscheiben (42, 46) drehantreibbar sind.

8. Drehmaschine nach einem der Ansprüche 4 bis 7, **dadurch gekennzeichnet, daß** zumindest einer der Spannköpfe (44) für das Werkstück (30) relativ zu dem anderen (40) verschiebbar ist.

9. Drehmaschine nach einem der Ansprüche 1 bis 8, **dadurch gekennzeichnet, daß** die Bohrstange (10) auf zumindest einem Bohrstangenschlitten (14, 18) so gehalten ist, daß sie längst ihrer Achse verfahrbar ist.

10. Drehmaschine nach einem der Ansprüche 1 bis 9, **dadurch gekennzeichnet, daß** die Bohrstange (10) in Richtung senkrecht zu ihrer Achse anstellbar ist.

## Claims

1. Lathe for internal machining of hollow workpieces, comprising
- a boring bar (10) on which a tool carrier (20) is arranged, and
- a device (40, 44) for holding a workpiece, such that it surrounds at least sections of the boring bar (10),
**characterized in that**
- the workpiece (30) is rotatably held in the device (40, 44) for holding a workpiece,
- the boring bar (10) is clamped in place at both ends and is held in a fixed position, i.e. in such a way that it cannot be rotated about its axis, and
- the tool carrier (20) is arranged so as to be movable on the boring bar (10) in order to carry out the internal machining.

2. Lathe according to Claim 1, **characterized in that** the tool carrier (20) is movable at least axially along the boring bar (10).

3. Lathe according to Claim 1 or 2, **characterized in that** the tool carrier (20) is movable radially with respect to the axis of the boring bar (10).

4. Lathe according to one of Claims 1 to 3, **characterized in that** the device (40, 44) for holding a workpiece has releasable clamping systems with gripping head.

5. Lathe according to Claim 4, **characterized in that** each clamping system has a hollow disc (42, 46) as gripping head, wherein the workpiece (30) can be clamped in place between the hollow discs.

6. Lathe according to Claim 5, **characterized in that** the hollow disc (42, 46) is designed as a frustoconical shell.

7. Lathe according to one of Claims 4 to 6, **characterized in that** the clamping systems (40, 44) and in particular the hollow discs (42, 46) can be rotationally driven.

8. Lathe according to one of Claims 4 to 7, **characterized in that** at least one of the gripping heads (44) for the workpiece (30) is displaceable relative to the other (40).

9. Lathe according to one of Claims 1 to 8, **characterized in that** the boring bar (10) is held on at least one boring-bar slide (14, 18) in such a way that it is traversable along its axis.

10. Lathe according to one of Claims 1 to 9, **characterized in that** the boring bar (10) can be set a direction perpendicularly to its axis.

## Revendications

1. Tour pour l'usinage intérieur par enlèvement de copeaux, de pièces à usiner creuses, comportant :
- une barre d'alésage (10), sur laquelle est disposé un porte-outil (20) ; et
- un dispositif (40, 44) pour le maintien d'une pièce à usiner qu'elle entoure la barre d'alésage (10) au moins par endroits ;
**caractérisé en ce que**
- la pièce à usiner (30) est maintenue dans le dispositif (40, 44) de maintien d'une pièce à usiner, de manière à pouvoir subir l'opération de tournage,
- la barre d'alésage (10) est serrée et maintenue verrouillée, c'est à dire de manière à ne pas pouvoir tourner autour son axe, à ses deux extrémités ; et
- le porte-outil (20) est disposé de manière mobile sur l'arbre d'alésage (10) pour la réalisation de l'usinage intérieur par enlèvement de copeaux.

2. Tour selon la revendication 1, **caractérisé en ce que** le porte-outil (20) est mobile au moins axialement le long de la barre d'alésage (10).

3. Tour selon la revendication 1 ou 2, **caractérisé en ce que** le porte-outil (20) est mobile radialement par rapport à l'axe de la barre d'alésage (10).

4. Tour selon l'une quelconque des revendications 1 à 3, **caractérisé en ce que** le dispositif (40, 44) pour le maintien d'une pièce à usiner comporte des systèmes amovibles de calage avec têtes de serrage.

5. Tour selon la revendication 4, **caractérisé en ce que** chaque système de calage comporte un disque creux (42, 46) en tant que tête de serrage, la pièce à usiner étant calée entre les disques creux.

6. Tour selon la revendication 5, **caractérisé en ce que** le disque creux (42, 46) est formé en tant qu'enveloppe tronconique.

7. Tour selon l'une quelconque des revendications 4 à 6, **caractérisé en ce que** les systèmes de calage (40, 44), et en particulier les disques creux (42, 46), peuvent être entrainés en rotation.

8. Tour selon l'une quelconque des revendications 4 à 7, **caractérisé en ce qu'**au moins une des têtes de serrage (44) pour la pièce à usiner (30) peut être déplacée par rapport à l'autre (40).

9. Tour selon l'une quelconque des revendications 1 à 8, **caractérisé en ce que** la barre d'alésage (10) est maintenue sur au moins un chariot de barre d'alésage (14, 18), de manière à pouvoir être déplacée le long de son axe.

10. Tour selon l'une quelconque des revendications 1 à 9, **caractérisé en ce que** la barre d'alésage (10) peut être installée dans une direction perpendiculaire à son axe.
